# EUROPEAN PATENT APPLICATION

(11) **EP 4 467 334 A1**
(43) Date of publication of application: **27.11.2024**
(21) Application number: 23766117.8
(22) Date of filing: 10.03.2023
(51) Int. Cl.: B32B 17/00, B32B 17/10, B32B 27/30, B32B 27/00, B32B 7/12, B32B 3/28, B32B 33/00, B60J 1/00

(54) **LAMINATED GLASS**

(30) Priority: 10.03.2022 CN 202210237283
(71) Applicant: Fuyao Glass Industry Group Co., Ltd., Fuqing, Fujian 350300 (CN)
(72) Inventor: PANG, Qirui, Fuqing, Fujian 350300 (CN); GUO, Shanji, Fuqing, Fujian 350300 (CN); ZHANG, Canzhong, Fuqing, Fujian 350300 (CN); KE, Cheng, Fuqing, Fujian 350300 (CN)
(74) Representative: Patentanwälte Olbricht Buchhold Keulertz
(86) International application number: PCT/CN2023/080657
(87) International publication number: WO 2023/169540

(57) **Abstract**

Provided is a laminated glass, comprising an outer glass pane (10), an inner glass pane (60), a functional coating (30), and a functional thin film (40) located between the outer glass pane (10) and the inner glass pane (60), wherein the functional coating (30) is located on a surface of the outer glass pane (10), the inner glass pane (60) or the functional thin film (40), and is obtained by curing a functional coating comprising an infrared absorbent and/or an ultraviolet absorbent; and the functional thin film (40) comprises at least two layers of alternately stacked resin thin films. The laminated glass has excellent thermal insulating performance, ultraviolet barrier capability, and electromagnetic wave transmission performance.

## Description

The present application claims priority of Chinese Patent Application No. 202210237283.6, filed with the State Intellectual Property Office of China on 10 Mach 2022 and entitled "LAMINATED GLASS", which is incorporated herein by reference in its entirety.

### TECHNICAL FIELD

The present invention relates to the technical field of glass manufacturing, and in particular to a laminated glass with a low total solar transmittance.

### BACKGROUND ART

The comfort of driving an automobile is increasingly valued by people. Under continuous sunlight, the ultraviolet light, visible light, infrared light, etc., inside a vehicle will continuously increase the temperature therein and accelerating the aging of internal parts. Therefore, under the condition of meeting the requirements for glass transmittance, further reducing light transmission and increasing light reflection can further reduce the temperature rise and the aging of parts inside the vehicle, while preventing the ultraviolet light from harming the retina, skin, etc.

CN 101168476 A discloses a low-emissivity plated glass that can be bent by baking, wherein a laminated thermal-insulation glass formed thereby has a visible light transmittance of 76% or more, and a solar energy transmittance of 53% or less.

CN 108911528 A discloses a double-side coated thermal-insulation automotive glass and a preparation method therefor, which achieves an ultraviolet light (355 nm or less) cut-off rate of up to 92% and an infrared (900-3000 nm) reflectance of more than 60% by coating the surface of the glass with a metal layer, an ultraviolet-proof layer, an infrared-reflective layer, and a protective layer by means of magnetron sputtering.

In CN 101168476 A and CN 108911528 A, although thermal insulation and ultraviolet blocking are achieved to some extent by providing glass with a metal layer to block ultraviolet light and infrared light, the metal layer will also strongly shield the final product from electromagnetic waves. In addition, a current plated glass process is complex, the device maintenance cost is high and the implementation conditions are harsh.

### SUMMARY OF THE INVENTION

In order to solve the aforementioned problems, an objective of the present invention is to provide a laminated glass, which can realize good ultraviolet and infrared light blocking performance, effectively reduce the total solar transmittance and save the cost, and has no shielding effect on electromagnetic wave signals by utilizing the synergistic effect of a functional thin film and a functional coating, without using a magnetron sputtering coating process.

In order to achieve the aforementioned objective, the present invention provides a laminated glass comprising an outer glass pane, an inner glass pane, a functional coating, and a functional thin film; wherein the functional thin film is located between the outer glass pane and the inner glass pane; the functional coating is applied on a surface of the outer glass pane, the inner glass pane or the functional thin film; the functional coating can absorb infrared light and/or ultraviolet light, and has a thickness of 3 µm-20 µm; and the functional thin film comprises at least two resin thin films which are alternately stacked, and has a visible light transmittance of greater than or equal to 70%.

In some specific embodiments, the functional coating is obtained by curing a functional coating composition, the raw materials of which comprise an infrared absorbent and/or an ultraviolet absorbent.

In some specific embodiments, the functional thin film has a thickness of 50 µm-200 µm.

In some specific embodiments, the laminated glass has a visible light transmittance of greater than or equal to 70%, and a total solar transmittance of less than or equal to 45%.

In some specific embodiments, the laminated glass has a visible light transmittance of less than or equal to 55%, and a total solar transmittance of less than or equal to 40%.

In some specific embodiments, the laminated glass has a visible light transmittance of less than or equal to 10%, and a total solar transmittance of less than or equal to 30%.

In some specific embodiments, the laminated glass has a visible light transmittance of less than or equal to 5%, and a total solar transmittance of less than or equal to 20%.

In some specific embodiments, the laminated glass may further comprise a switchable element, which is located between the functional thin film and the inner glass pane.

In some specific embodiments, the switchable element comprises one of a PDLC switchable film, an SPD switchable film, or an EC switchable film, etc.

In some specific embodiments, the laminated glass further comprises at least one binding layer, which is located between the outer glass pane and the inner glass pane.

In some specific embodiments, the material of the binding layer comprises one of or a combination of two or more of PVB (polyvinyl butyral), PU (polyurethane), SGP (ionic polymer film), and EVA (ethylene-vinyl acetate copolymer).

In some specific embodiments, the laminated glass comprises at least two binding layers, which are located between the outer glass pane and the functional thin film, and between the inner glass pane and the functional thin film. Here, the binding layer between the outer glass pane and the functional thin film has a visible light transmittance of greater than or equal to 80%.

In some specific embodiments, the functional thin film has an infrared reflectance of greater than or equal to 35%. Here, the infrared reflectance, i.e., the reflectance in a wavelength range of 780 nm-2500 nm of the functional thin film, can be measured and calculated according to ISO9050.

In some specific embodiments, the functional thin film may comprise 50-5,000 resin thin films which are alternately stacked, with the difference of the refractive index between adjacent resin thin films being 0.05 or more.

In some specific embodiments, the material of the resin thin film comprises one of or a combination of two or more of polyethylene, polypropylene, polylactic acid, poly(4-methylpentene-1), polyvinylidene fluoride, cyclic polyolefins, polymethyl methacrylate, polyvinyl chloride, polyvinyl alcohol, polyamide, polystyrene, polycarbonate, polyethylene terephthalate, polyethylene naphthalate, polyphenylene sulfide or polyetherimide.

In some specific embodiments, the raw materials of the functional coating composition comprise a chelating agent, a silica sol, a transparent resin and an infrared absorbent, and the raw materials of the chelating agent comprise an ultraviolet absorbent.

In some specific embodiments, as a raw material of the chelating agent, the ultraviolet absorbent comprises one of or a combination of two or more of benzophenone ultraviolet absorbents, benzimidazole ultraviolet absorbents, triazine ultraviolet absorbents, azo ultraviolet absorbents, isoindolinone ultraviolet absorbents, quinophthalone ultraviolet absorbents, and benzimidazolone ultraviolet absorbents. Specifically, the ultraviolet absorbent may comprise BP-2 (Jadewin New Material Technology, Co. Ltd, Qiongdao), etc.

In some specific embodiments, the mass ratio of the chelating agent, the silica sol, the transparent resin and the infrared absorbent is (5-20) : 100 : (20-40) : (1-15).

In some specific embodiments, the raw materials of the chelating agent further comprise a first catalyst, a first coupling agent, and a first solvent.

In some specific embodiments, in the raw materials of the chelating agent, the mass ratio of the ultraviolet absorbent, the first catalyst, the first coupling agent, and the first solvent is (1-30) : (0.01-1) : (10-30) : (40-60).

In some specific embodiments, the raw materials of the silica sol comprise a silicate, a second catalyst, a second coupling agent, a second solvent and water.

In some specific embodiments, in the raw materials of the silica sol, the mass ratio of the silicate, the second catalyst, the second coupling agent, the second solvent and water is (15-35) : (0.01-1) : (5-15) : (30-60) : (10-30).

In some specific embodiments, the transparent resin comprises an epoxy resin, etc.

In some specific embodiments, the infrared absorbent is nanoparticles of a transparent conductive oxide. Here, the transparent conductive oxide may comprise one of or a combination of two or more of ITO, FTO, WO₃, CsₓWO₃, ATO and doped VO₂.

In some specific embodiments, the laminated glass has a first vertical radius of curvature; the pre-formed functional thin film has a second vertical radius of curvature; and the second vertical radius of curvature (of the pre-formed functional thin film) is 40%-100% of the first vertical radius of curvature (of the laminated glass). Here, the pre-forming process refers to, prior to forming the laminated glass, a process in which a functional thin film is laid onto a curved glass pane and then a functional coating composition is applied on the surface of the functional thin film and is thermally cured, such that the surface of the pre-formed functional thin film has a functional coating.

In some specific embodiments, the outer glass pane is transparent glass or colored glass with a visible light transmittance of greater than or equal to 70%, and the inner glass pane is transparent glass or colored glass with a visible light transmittance of greater than or equal to 70%.

In some specific embodiments, the laminated glass further comprises a low-emissivity plated film.

In some specific embodiments, the low-emissivity plated film is deposited on the surface of the inner glass pane that is close to the interior of a vehicle.

In some specific embodiments, the low-emissivity plated film comprises at least one transparent conductive oxide layer.

In some specific embodiments, when the laminated glass comprises a low-emissivity plated film, the laminated glass has an emissivity of 0.01-0.25 as measured inside a vehicle.

The beneficial effects of the present invention lie in that the laminated glass provided by the present invention has a total solar transmittance TTS which can reach less than or equal to 45%, even less than or equal to 30%, and more even less than or equal to 20%, thus having excellent thermal insulation performance. Meanwhile, the laminated glass can also block at least 99% of ultraviolet light in a wavelength range of 300 nm-380 nm, and even at least 99% of ultraviolet light and visible light in a wavelength range of 300 nm-420 nm, which facilitates the energy saving of an air conditioner in a vehicle, provides a comfortable driving environment, and reduces the aging of vehicle interior trims due to ultraviolet light irradiation and the melanin deposition in the human body under long-term irradiation. In addition, the laminated glass provided by the present invention also has good electromagnetic wave transmission performance and can be bent and formed more easily, thus meeting the use requirements for window glass in different parts of a vehicle.

### BRIEF DESCRIPTION OF THE DRAWINGS

Fig. 1 shows a schematic structural diagram of a laminated glass in examples 1 to 5 of the present invention.
Fig. 2 shows a schematic structural diagram of laminated glass in example 6 of the present invention.
Fig. 3 shows a schematic structural diagram of laminated glass in example 7 of the present invention.
Fig. 4 shows a schematic structural diagram of laminated glass in example 8 of the present invention.
Fig. 5 shows a schematic structural diagram of laminated glass in example 9 of the present invention.
Fig. 6 shows a schematic structural diagram of laminated glass comprising a switchable element of the present invention.
Fig. 7 shows a schematic structural diagram of laminated glass comprising a low-emissivity plated film of the present invention.

### Description of symbols of main components:

10: outer glass pane; 11: first surface of outer glass pane; 12: first surface of outer glass pane; 20: first binding layer; 30: functional coating; 40: functional thin film; 41: first convex surface of functional thin film; 42: second concave surface of functional thin film; 50: second binding layer; 60: inner glass pane; 61: third surface of inner glass pane; 62: fourth surface of inner glass pane; 70: switchable element; 80: third binding layer; 90: low-emissivity plated film.

### DETAILED DESCRIPTION OF EMBODIMENTS

In order to understand the technical features, objective and beneficial effects of the present invention more clearly, the technical solution of the present invention is described in details as below, but it cannot be construed as a limitation for the implementable scope of the present invention.

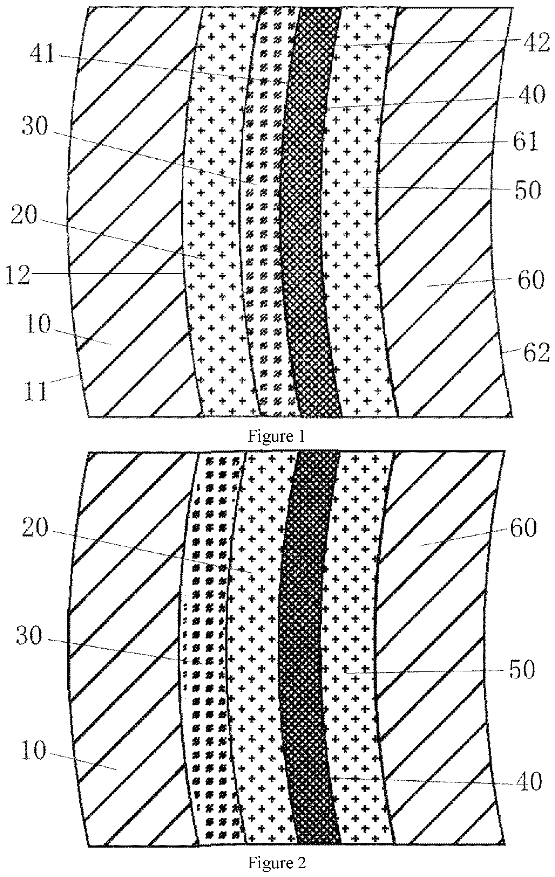

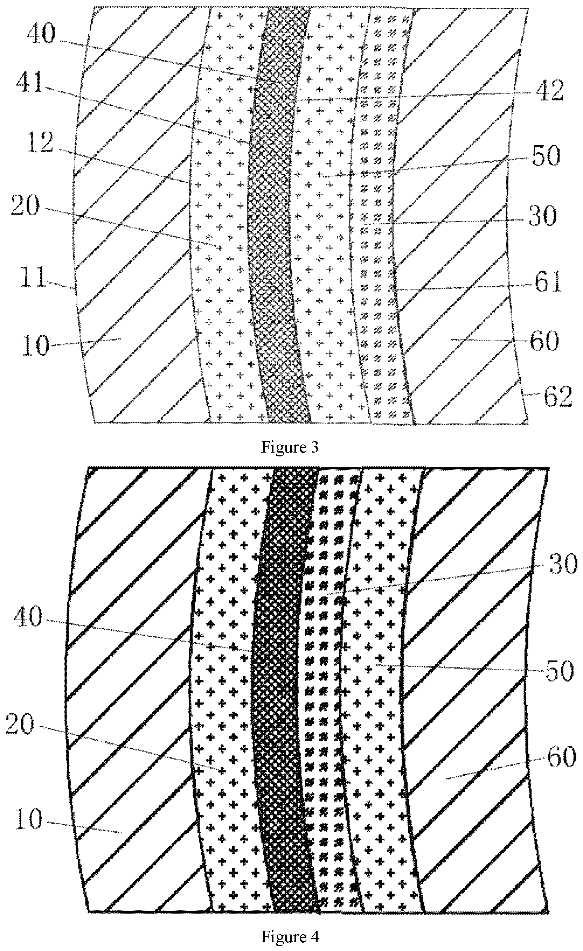

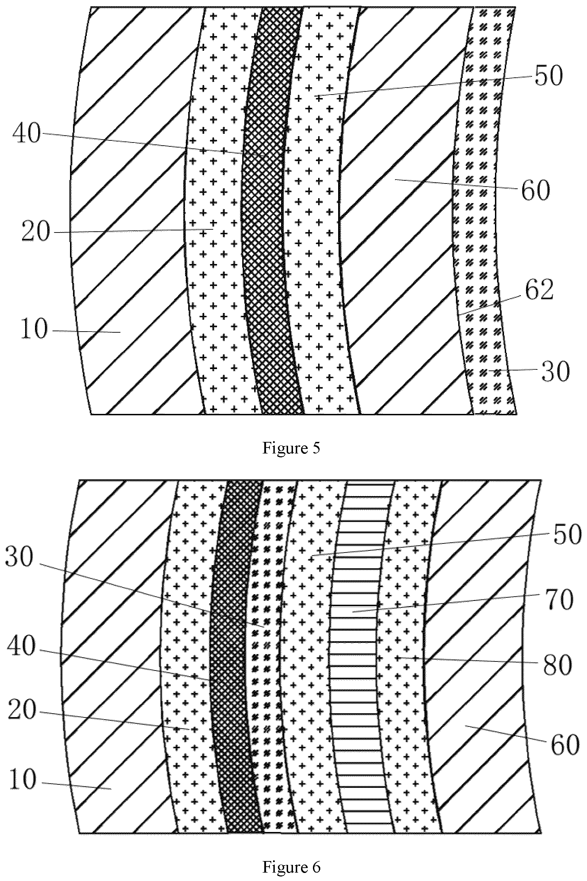

As shown in Figs. 1 to 5, the present invention provides a laminated glass comprising an outer glass pane 10, an inner glass pane 60, a functional coating 30 and a functional thin film 40; wherein the functional thin film 40 is located between the outer glass pane 10 and the inner glass pane 60; the functional coating 30 is applied on a surface of the outer glass pane 10 (Figs. 1 and 2), a surface of the inner glass pane 60 (Figs. 3 and 5), or a surface of the functional thin film 40 (Fig. 4); the functional coating 30 can absorb infrared light and/or ultraviolet light, and has a thickness of 3 µm-20 µm; and the functional thin film 40 comprises at least two resin thin film layers which are alternately stacked, and the functional thin film 40 has a visible light transmittance of greater than or equal to 70%.

In the present invention, the functional coating 30 can be obtained by curing a functional coating composition, the raw materials of which comprise an infrared absorbent and/or an ultraviolet absorbent.

In the present invention, the thickness of the functional thin film 40 is generally controlled to be 50 µm-200 µm.

In the present invention, the laminated glass further comprises at least one binding layer, for example, a first binding layer 20, a second binding layer 50, and a third binding layer 80 as shown in Figs. 1 to 7. The above binding layer is located between the outer glass pane 10 and the inner glass pane 60, and the material of the binding layer comprises one of or a combination of two or more of PVB (polyvinyl butyral), PU (polyurethane), SGP (ionic polymer film), and EVA (ethylene-vinyl acetate copolymer).

Further, the laminated glass comprises at least two binding layers, which are located between the outer glass pane 10 and the functional thin film 40, and between the inner glass pane 60 and the functional thin film 40, respectively. The binding layer (for example, the first binding layer 20) between the outer glass pane 10 and the functional thin film 40 has a visible light transmittance of greater than or equal to 80%.

In the present invention, after a laminated glass is installed on a vehicle, the outer glass pane 10 is located outside of the vehicle, and the outer glass pane 10 has a first surface 11 facing outward and a second surface 12 facing the interior of the vehicle; the inner glass pane 60 is located inside of the vehicle, and the inner glass pane 60 has a third surface 61 facing outward and a fourth surface 62 facing the interior of the vehicle; and the functional thin film 40 has a first convex surface 41 facing the outer glass pane 10 and a second concave surface 42 facing the inner glass pane 60.

Here, the functional coating 30 is used to absorb ultraviolet light and infrared light, and the functional thin film 40 is used to reflect infrared light. Due to the synergistic effect of the functional coating 30 and the functional thin film 40, the total solar transmittance TTS of the laminated glass can be reduced, and ultraviolet light can be blocked. In the prior art, in order to reduce infrared radiation, it is generally necessary to provide glass with an infrared-reflective plated film comprising at least one metal layer, but the infrared-reflective plated film will lead to the problem of electromagnetic wave shielding. In the present invention, by providing a functional coating 30 and a functional thin film 40, it may unnecessary to additionally provide the infrared-reflective plated film mentioned above, such that the laminated glass will not shield electromagnetic waves, thereby ensuring the transmission of communication signals. Due to the total solar transmittance TTS of the laminated glass of the present invention can reach less than or equal to 45%, it can also block at least 99% of ultraviolet light in a wavelength range of 300 nm-380 nm.

In some specific embodiments, the laminated glass has a visible light transmittance of greater than or equal to 70%, and a total solar transmittance of less than or equal to 45%. Specifically, the total solar transmittance may be 19%-45%, for example, 20%, 25%, 30%, 35% or 40%. Alternatively, the total solar transmittance may be less than or equal to 19%. The laminated glass meets the requirements of both thermal insulation and safe driving standards, and can be used as windshield glass, side window glass, back window glass, and sunroof glass.

In some specific embodiments, with a visible light transmittance of less than or equal to 55% and a total solar transmittance of less than or equal to 40%, the laminated glass meets the requirements of not only thermal insulation but also protecting the privacy inside a vehicle, and can be used as side window glass, back window glass and sunroof glass.

In some specific embodiments, with a visible light transmittance of less than or equal to 10% and a total solar transmittance of less than or equal to 30%, the laminated glass meets the requirements of not only thermal insulation but also low visible light transmission, or even ultra-low visible light transmission, and can be used as sunroof glass, such that the purpose of eliminating traditional sunroof sunshades is achieved, thereby increasing the interior space of a vehicle and saving the cost of the whole vehicle. Further, the laminated glass of the present invention has a visible light transmittance of less than or equal to 5%, even less than or equal to 4%, less than or equal to 3%, less than or equal to 2%, or less than or equal to 1%. The laminated glass has a total solar transmittance of less than or equal to 20%, and specifically, for example, less than or equal to 19%, less than or equal to 18%, less than or equal to 17%, less than or equal to 16%, less than or equal to 15%, less than or equal to 14%, less than or equal to 13%, less than or equal to 12%, less than or equal to 11%, or less than or equal to 10%.

In some specific embodiments, the aforementioned laminated glass with a low visible light transmittance may also further comprise a switchable element. As shown in Fig. 6, a switchable element 70 is located between the functional thin film 40 and the inner glass pane 60, which can be used to adjust the visible light transmittance and the total solar transmittance of the laminated glass.

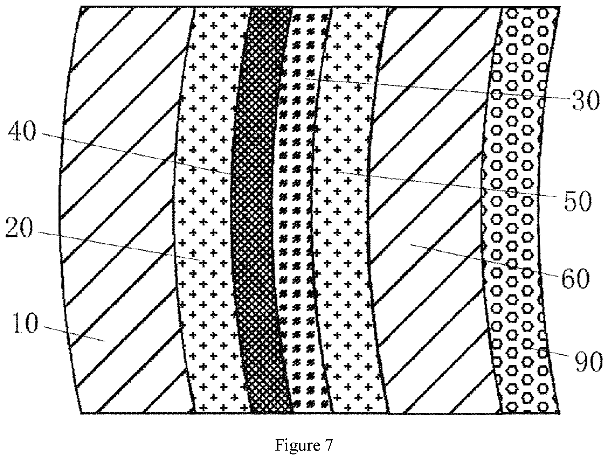

In some specific embodiments, the aforementioned laminated glass may also further comprise a low-emissivity (Low-E) plated film. As shown in Fig. 7, a low-emissivity plated film 90 is deposited on the fourth surface 62 of the inner glass pane 60, such that the intensity of radiation received inside a vehicle can be further reduced.

In some specific embodiments, both the outer glass pane 10 and the inner glass pane 60 are curved glass panes. The curved glass pane used in the present invention can be obtained by subjecting flat and straight glass to a heat treatment at an elevated temperature of 560°C or higher, and bending and forming. In the present invention, it is unnecessary to additionally provide, on a surface of the outer glass pane 10 and the inner glass pane 60, an infrared-reflective plated film comprising at least one metal layer (for example, a single-silver infrared-reflective plated film, a dual-silver infrared-reflective plated film, a triple-silver infrared-reflective plated film, and a quadruple-silver infrared-reflective plated film which are well known to those skilled in the art), such that the problem that the outer glass pane 10 and the inner glass pane 60 cannot be bent and formed at the same time is solved, and the production complexity of bending and forming the outer glass pane 10 and the inner glass pane 60 is reduced, thereby improving the production efficiency of bending and forming.

The laminated glass provided by the present invention may be classified as an absorption-reflection type laminated glass and a reflection-absorption type laminated glass, depending on the relative position of the functional coating 30 and the functional thin film 40. For example, Figs. 1 to 2 show the absorption-reflection type laminated glass, and Figs. 3 to 7 illustrate the reflection-absorption type laminated glass.

As shown in Figs 1 and 2, the functional coating 30 is located on the outer side of the functional thin film 40, that is, the functional coating 30 is closer to the outer glass pane 10 than the functional thin film 40. In this case, when sunlight irradiates from outside into a vehicle, it is first partially absorbed by the functional coating 30, and then partially reflected by the functional thin film 40, such that the total solar transmittance TTS is reduced, and the vast majority of the ultraviolet light are blocked.

As shown in Fig. 1, viewed from the outside to the inside of a vehicle, the structure of the laminated glass sequentially comprises: an outer glass pane 10, a first binding layer 20, a functional coating 30, a functional thin film 40, a second binding layer 50, and an inner glass pane 60, with the functional coating 30 being applied on the first convex surface 41 of the functional thin film 40.

As shown in Fig. 2, viewed from the outside to the inside of a vehicle, the structure of the laminated glass sequentially comprises: an outer glass pane 10, a functional coating 30, a first binding layer 20, a functional thin film 40, a second binding layer 50, and an inner glass pane 60, with the functional coating 30 being applied on the second surface 12 of the outer glass pane 10.

As shown in Figs 3 to 7, the functional thin film 40 is located on the outer side of the functional coating 30, that is, the functional thin film 40 is closer to the outer glass pane 10 than the functional coating 30. In this case, when sunlight irradiates from outside into a vehicle, it is first partially reflected by the functional thin film 40, and then partially absorbed by the functional coating 30, such that the total solar transmittance TTS is reduced, and the vast majority of the ultraviolet light are blocked.

As shown in Fig. 3, viewed from the outside to the inside of a vehicle, the structure of the laminated glass sequentially comprises: an outer glass pane 10, a first binding layer 20, a functional thin film 40, a second binding layer 50, a functional coating 30, and an inner glass pane 60, with the functional coating 30 being applied on the third surface 61 of the inner glass pane 60.

As shown in Fig. 4, viewed from the outside to the inside of a vehicle, the structure of the laminated glass sequentially comprises: an outer glass pane 10, a first binding layer 20, a functional thin film 40, a functional coating 30, a second binding layer 50, and an inner glass pane 60, with the functional coating 30 being applied on the second concave surface 42 of the functional thin film 40.

As shown in Fig. 5, viewed from the outside to the inside of a vehicle, the structure of the laminated glass sequentially comprises: an outer glass pane 10, a first binding layer 20, a functional thin film 40, a second binding layer 50, an inner glass pane 60, and a functional coating 30, with the functional coating 30 being applied on the fourth surface 62 of the inner glass pane 60.

As shown in Fig. 6, viewed from the outside to the inside of a vehicle, the structure of the laminated glass sequentially comprises: an outer glass pane 10, a first binding layer 20, a functional thin film 40, a functional coating 30, a second binding layer 50, a switchable element 70, a third binding layer 80, and an inner glass pane 60, with the functional coating 30 being applied on the second concave surface 42 of the functional thin film 40, and the switchable element 70 being located between the functional coating 30 and the inner glass pane 60, and more specifically, the switchable element 70 being located between the second binding layer 50 and the third binding layer 80.

In Fig. 6, the switchable element 70 used in the laminated glass may be a PDLC switchable film, an SPD switchable film, or an EC switchable film. Preferably, both the functional coating 30 and the functional thin film 40 are located on the outer side of the switchable element 70. This protects the switchable element from being aged by sunlight and prolongs the service life thereof while reducing the total solar transmittance of the laminated glass and blocking the ultraviolet light.

As shown in Fig. 7, viewed from the outside to the inside of a vehicle, the structure of the laminated glass sequentially comprises: an outer glass pane 10, a first binding layer 20, a functional thin film 40, a functional coating 30, a second binding layer 50, an inner glass pane 60, and a low-emissivity plated film 90, with the functional coating 30 being applied on the second concave surface 42 of the functional thin film 40, and the low-emissivity plated film 90 being deposited on the fourth surface 62 of the inner glass pane, that is, on the surface of the inner glass pane 60 that is close to the interior of a vehicle.

In Fig. 7, the low-emissivity plated film 90 in the laminated glass comprises at least one transparent conductive oxide layer (TCO layer), which may be, for example, an ITO (indium tin oxide) layer, an FTO (fluorine-doped tin oxide) layer, an ATO (antimony-doped tin oxide) layer, and an AZO (aluminum-doped zinc oxide) layer. The low-emissivity plated film 90 can reduce the emissivity of the laminated glass as measured inside a vehicle. In the present invention, the laminated glass with a low-emissivity plated film has an emissivity of 0.01-0.25 as measured inside a vehicle, which enables the interior environment of a vehicle to remain warm in winter and cool in summer, thereby reducing the energy consumption of heating and cooling of an air conditioner. Therefore, the laminated glass has the advantages of energy saving, environmental protection and the like.

The functional coating 30 of the present invention can also absorb visible light, resulting in a laminated glass having a visible light transmittance of less than 70%, or less than 60%, or less than 50%, or less than 40%, or less than 30%, or less than 20%, or less than 10%, or less than 5%. Especially for the visible light in a wavelength range of 380 nm-420 nm, the visible light transmittance of the laminated glass in the wavelength range of 380 nm-420 nm is less than or equal to 1%, and the visible light transmittance of the laminated glass of the present invention in the wavelength range of 300 nm-380 nm is less than or equal to 1%. Therefore, by using a functional coating 30, the laminated glass of the present invention can block at least 99% of ultraviolet light and visible light in a wavelength range of 300 nm-420 nm. In some specific embodiments, a standard PVB is preferably used as the binding layer compared with EVA or ultraviolet-enhanced PVB. The standard PVB can play a binding role on the one hand, and can protect the switchable element from ultraviolet light aging on the other hand, which can significantly reduce the cost of the laminated glass and improve the product competitiveness.

In some specific embodiments, the outer glass pane 10 is transparent glass or colored glass with a visible light transmittance of greater than or equal to 70%, and the inner glass pane 60 is transparent glass or colored glass with a visible light transmittance of greater than or equal to 70%. Since the functional coating 30 used in the present invention can effectively absorb visible light, it is unnecessary to use low-transmittance colored glass as the outer glass pane or the inner glass pane when selecting the outer glass pane or the inner glass pane, which can significantly reduce the cost of the laminated glass and improve the product competitiveness.

In the present invention, the thickness of the functional thin film 40 is controlled to be 50 µm-200 µm, and the visible light transmittance thereof is greater than or equal to 70%, and thus the functional thin film is thin and has good light transmittance. The functional thin film 40 used in the present invention has an infrared reflectance of greater than or equal to 35%, the functional thin film 40 comprises 50-5,000 resin thin films which are alternately stacked, and the functional thin film 40 can reduce the total solar transmittance of the laminated glass without shielding electromagnetic waves. Preferably, the functional thin film 40 comprises 100-2,000 resin thin films which are alternately stacked, and specifically, for example, 100, 200, 300, 400, 500, 600, 700, 800, 900, 1,000, 1,100, 1,200, 1,300, 1,400, 1,500, 1,600, 1,700, 1,800, 1,900 or 2,000. The difference of the refractive index between adjacent resin thin films is 0.05 or more, preferably 0.1 or more, and specifically, for example, 0.1, 0.2, 0.3, 0.4 or 0.5. In some specific embodiments, the material of the resin thin film comprises one of or a combination of two or more of polyethylene, polypropylene, polylactic acid, poly(4-methylpentene-1), polyvinylidene fluoride, cyclic polyolefins, polymethyl methacrylate, polyvinyl chloride, polyvinyl alcohol, polyamide, polystyrene, polycarbonate, polyethylene terephthalate, polyethylene naphthalate, polyphenylene sulfide or polyetherimide.

In the present invention, the raw materials of the functional coating composition comprise a chelating agent, a silica sol, a transparent resin and an infrared absorbent, and the raw materials of the chelating agent comprise an ultraviolet absorbent. Here, the mass ratio of the chelating agent, the silica sol, the transparent resin and the infrared absorbent is (5-20) : 100 : (20-40) : (1-15).

In some specific embodiments, the ultraviolet absorbent comprises one of or a combination of two or more of benzophenone ultraviolet absorbents, benzimidazole ultraviolet absorbents, triazine ultraviolet absorbents, azo ultraviolet absorbents, isoindolinone ultraviolet absorbents, quinophthalone ultraviolet absorbents, and benzimidazolone ultraviolet absorbents. Specifically, the ultraviolet absorbent may comprise BP-2 (Jadewin New Material Technology, Co. Ltd, Qiongdao), etc.

In some specific embodiments, the infrared absorbents are nanoparticles of a transparent conductive oxide, and the transparent conductive oxide comprises at least one of ITO (indium tin oxide), FTO (fluorine-doped tin oxide), WO₃ (tungsten trioxide), CsₓWO₃ (cesium-doped tungsten trioxide, CWO), ATO (antimony-doped tin oxide), and doped VO₂ (doped vanadium dioxide).

As a raw material of the above functional coating composition, the transparent resin is a resin that is soluble in water and easily soluble in an organic solvent. The transparent resin can wrap and modify the ultraviolet absorbent and the infrared absorbent, and further improve the dispersion of the two absorbents in a solvent. In some specific embodiments, the transparent resin is an epoxy resin, the epoxy bond of which can generate a free radical during the curing process of the functional coating composition, thus promoting the curing of the functional coating and further enhancing the toughness of the formed functional coating.

In some specific embodiments, the ultraviolet absorbent is added to the functional coating in the form of a chelating agent, and the raw materials of the chelating agent specifically comprise an ultraviolet absorbent, a first catalyst, a first coupling agent and a first solvent, with the mass ratio of the ultraviolet absorbent, the first catalyst, the first coupling agent and the first solvent being (1-30) : (0.01-1) : (10-30) : (40-60). Here, the first catalyst comprises one of or a combination of two or more of dibutyltin dilaurate, an organic bismuth catalyst (such as bismuth isooctanoate), and stannous octoate. The first coupling agent is a silane coupling agent, and comprises, for example, one of or a combination of two or more of 3-aminopropyltrimethoxysilane, γ-aminopropyltriethoxysilane, γ-(2,3-epoxypropoxy)propyltrimethoxysilane, γ-methacryloxypropyltrimethoxysilane, and N-(β-aminoethyl)-γ-aminopropyltrimethoxysilane. The first solvent comprises one of or a combination of two or more of butyl acetate, propylene glycol methyl ether, isobutyl acetate, and xylene.

In some specific embodiments, the raw materials of the silica sol comprise a silicate, a second catalyst, a second coupling agent, a second solvent and water, with the mass ratio of the silicate, the second catalyst, the second coupling agent, the second solvent and water being (15-35) : (0.01-1) : (5-15) : (30-60) : (10-30). Here, the silicate comprises a silicate ester and/or an oxysilane, and may comprise, for example, one of or a combination of two or more of methyl orthosilicate, ethyl orthosilicate, trimethoxysilane, triethoxysilane and dimethyldimethoxysilane. The second catalyst may comprise an acid, a base, etc., for example, one of or a combination of two or more of hydrochloric acid, nitric acid and ammonia water. The second coupling agent may comprise a silane coupling agent, for example, one of or a combination of two or more of 3-aminopropyltrimethoxysilane, γ-aminopropyltriethoxysilane, γ-(2,3-epoxypropoxy)propyltrimethoxysilane, γ-methacryloxypropyltrimethoxysilane, and N-(β-aminoethyl)-γ-aminopropyltrimethoxysilane. The second solvent may comprise one of or a combination of two or more of methanol, ethanol, propanol, isopropanol, butanol, and propylene glycol methyl ether.

As shown in Figs. 1 to 7, a functional coating 30 may be applied on the second surface 12 of an outer glass pane 10 (Fig. 2), or on the first convex surface 41 of a functional thin film 40 (Fig. 1), or on the second concave surface 42 of the functional thin film 40 (Figs. 4, 6 and 7), or on the third surface 61 of an inner glass pane 60 (Fig. 3), or on the fourth surface 62 of the inner glass pane (Fig. 5). It could be understood that the present invention is not limited thereto and it is also possible to provide a plurality of functional coatings layers 30, which are simultaneously applied on at least two of the aforementioned surfaces. For example, the second surface 12 of the outer glass pane 10 and the third surface 61 of the inner glass pane 60 are simultaneously coated with a functional coating 30.

In the present invention, the functional coating 30 is obtained by curing a functional coating composition, the curing temperature may be 70°C-150°C (for example, 80°C, 100°C, 120°C or 150°C), and the curing time may be 10 min-200 min.

In some specific embodiments, the laminated glass, the inner glass pane 60 and/or the outer glass pane 10 have a first vertical radius of curvature. In the present invention, the first vertical radius of curvature is the vertical radius of curvature of the outer glass pane 10 and/or the inner glass pane 60 that have been bent and formed into a final shape, and meanwhile, the first vertical radius of curvature also refers to the vertical radius of curvature of the laminated glass formed by an outer glass pane 10, an inner glass pane 60, a functional coating 30, a functional thin film 40, etc. In a specific embodiment, the first vertical radius of curvature is the radius of curvature of an arc from the bottom edge to the top edge of the laminated glass after being installed on a vehicle. The first vertical radius of curvature is preferably 4,000 mm-15,000 mm.

In some specific embodiments, the functional coating 30 is applied on a surface of the functional thin film 40, for example, on the first convex surface 41 and/or the second concave surface 42 of the functional thin film 40. Since the functional thin film 40 is flexible to some extent, the functional thin film 40 coated with a functional coating 30 can be pre-formed to have a second vertical radius of curvature before forming the laminated glass, and the second vertical radius of curvature of the pre-formed functional thin film 40 is 40%-100% of the first vertical radius of curvature of the laminated glass. Thus, the functional thin film 40 coated with a functional coating 30 can have a curved surface roughly similar to the final shape of the laminated glass, such that the problem of the wrinkling of the functional thin film is alleviated or eliminated during the subsequent production (for example, autoclave treatment) of the laminated glass, and the functional thin film more closely matches the curved surface of the outer glass pane or the inner glass pane.

Specifically, the pre-forming step comprises: preparing a curved glass pane with a first vertical radius of curvature, lying a functional thin film 40 onto the convex surface or the concave surface of the curved glass pane, then applying a functional coating composition on the first convex surface 41 or the second concave surface 42 of the functional thin film 40 accordingly (for example, when the functional thin film 40 is laid onto the concave surface of the curved glass, the first convex surface 41 of the functional thin film 40 is attached to the curved glass, and the functional coating composition is applied on the second concave surface 42 of the functional thin film 40 accordingly, and vice versa), then thermally curing them together (for example, in an oven) at a temperature of 70°C-150°C to obtain a pre-formed (pre-bent) functional thin film 40 that has a second vertical radius of curvature and is coated with a functional coating 30.

In the present invention, when a functional coating 30 is located on a surface of a functional thin film 40 in a laminated glass, the preparation method of the laminated glass may comprise:
1. lying the functional thin film 40 onto a curved glass pane, and applying the functional coating composition on the surface of the functional thin film 40 that is away from the curved glass pane, followed by thermally curing to obtain the pre-formed functional thin film 40 with a second vertical radius of curvature; and
2. sequentially laminating together the pre-formed functional thin film with an inner glass pane 60 and an outer glass pane 10, which have a first vertical radius of curvature, so as to obtain the laminated glass.

All of the outer glass panes and the inner glass panes used in the examples and comparative examples below are curved glass panes, and the two surfaces of each curved glass pane are classified into a convex surface and a concave surface according to the degree of curvature. When being used, the outer glass pane has a first surface that is convex and a second surface that is concave, and the inner glass pane has a third surface that is convex and a fourth surface that is concave.

The preparation method of the chelating agent used in the examples below is as follows:

Chelating agent A: In parts by mass, 2 parts of an ultraviolet absorbent (BP-2, Jadewin New Material Technology, Co. Ltd, Qiongdao), 0.002 parts of dibutyltin dilaurate, 2 parts of 3-aminopropyltrimethoxysilane, and 5 parts of propylene glycol methyl ether (as the first solvent) are mixed, heated and stirred under reflux to obtain the chelating agent A.

Chelating agent B: In parts by mass, 2.5 parts of an ultraviolet absorbent (1226, Jadewin New Material Technology, Co. Ltd, Qiongdao), 0.002 parts of dibutyltin dilaurate, 2.5 parts of 3-aminopropyltrimethoxysilane, and 5 parts of propylene glycol methyl ether (as the first solvent) are mixed, heated and stirred under reflux to obtain the chelating agent B.

In the present invention, the ultraviolet absorbent is added to the functional coating in the form of a chelating agent. This helps the ultraviolet absorbent to be better miscible with the silica sol, thereby improving the stability of the functional coating.

The preparation method of the silica sol C used in the examples and comparative examples below is as follows:

in parts by mass, 20 parts of ethyl orthosilicate, 1 part of a 0.1 N nitric acid solution, 10 parts of γ-aminopropyltriethoxysilane, 50 parts of propylene glycol methyl ether and 20 parts of deionized water are mixed and stirred to obtain the silica sol C.

The functional thin film used in the examples below is a commercially available infrared-reflective thin film, for example, Picasus IR film from Toray Industries, Inc., Japan, which has a reflectance of at least 35% for infrared light of 780 nm-2500 nm. The functional thin film is formed by 100-2,000 resin thin films which are alternately stacked, and has a thickness of 50 µm-200 µm and a visible light transmittance of 70% or more.

### Comparative example 1 and examples 1 to 5

### Example 1

A laminated glass was provided in example 1, which was prepared by a method comprising:
1. mixing 10 g of a chelating agent A, 70 g of a silica sol C, 17 g of an epoxy resin, and 2 g of an infrared absorbent (CsₓWO₃), and stirring same until uniform to obtain a functional coating composition;
2. preparing a curved glass pane with a first vertical radius of curvature as an inner glass pane 60; and lying a functional thin film 40 onto the convex surface of a curved glass pane (which is different from the inner glass pane 60, and the same is true for the following examples and comparative examples), and then applying the functional coating composition onto the first convex surface 41 of the functional thin film 40 and then thermally curing them together in an oven to obtain a pre-formed functional thin film 40 that had a second vertical radius of curvature and was coated with a functional coating 30 with a thickness of 3.2 µm, wherein the second vertical radius of curvature was 75% of the first vertical radius of curvature; and
3. taking another curved glass pane with a first vertical radius of curvature as an outer glass pane 10 (which has the same first vertical radius of curvature as that of the inner glass pane 60, and the same is true for the following examples and comparative examples), taking two standard PVB sheets as a first binding layer 20 and a second binding layer 50, laminating the two curved glass panes, the two standard PVB sheets, and the functional thin film 40 coated with the functional coating 30 together according to a stacking sequence as shown in Fig. 1, and obtaining a laminated glass D1 according to a production process of automotive glass.

### Example 2

A laminated glass was provided in example 2, which was prepared by a method comprising:
1. mixing 10 g of a chelating agent B, 70 g of a silica sol C, 17 g of an epoxy resin, and 2 g of an infrared absorbent (CsₓWO₃), and stirring same until uniform to obtain a functional coating composition;
2. preparing a curved glass pane with a first vertical radius of curvature as an inner glass pane 60; and lying a functional thin film 40 onto the convex surface of a curved glass pane, and then applying the functional coating composition onto the first convex surface 41 of the functional thin film 40 and then thermally curing them together in an oven to obtain a pre-formed functional thin film 40 that had a second vertical radius of curvature and was coated with a functional coating 30 with a thickness of 5.2 µm, wherein the second vertical radius of curvature was 75% of the first vertical radius of curvature; and
3. taking another curved glass pane with a first vertical radius of curvature as an outer glass pane 10, taking two standard PVB sheets as a first binding layer 20 and a second binding layer 50, laminating the two curved glass panes, the two standard PVB sheets, and the functional thin film 40 coated with the functional coating 30 together according to a stacking sequence as shown in Fig. 1, and obtaining a laminated glass D2 according to a production process of automotive glass.

### Example 3

A laminated glass was provided in example 3, which was prepared by a method comprising:
1. mixing 10 g of a chelating agent A, 70 g of a silica sol C, 17 g of an epoxy resin, and 4 g of an infrared absorbent (CsₓWO₃), and stirring same until uniform to obtain a functional coating composition;
2. preparing a curved glass pane with a first vertical radius of curvature as an inner glass pane 60; and lying a functional thin film 40 onto the convex surface of a curved glass pane, and then applying the functional coating composition onto the first convex surface 41 of the functional thin film 40 and then thermally curing them together in an oven to obtain a pre-formed functional thin film 40 that had a second vertical radius of curvature and was coated with a functional coating 30 with a thickness of 5.1 µm, wherein the second vertical radius of curvature was 75% of the first vertical radius of curvature; and
3. taking another curved glass pane with a first vertical radius of curvature as an outer glass pane 10, taking two standard PVB sheets as a first binding layer 20 and a second binding layer 50, laminating the two curved glass panes, the two standard PVB sheets, and the functional thin film 40 coated with the functional coating 30 together according to a stacking sequence as shown in Fig. 1, and obtaining a laminated glass D3 according to a production process of automotive glass.

### Example 4

A laminated glass was provided in example 4, which was prepared by a method comprising:
1. mixing 10 g of a chelating agent A, 70 g of a silica sol C, 17 g of an epoxy resin, and 6.2 g of an infrared absorbent (CsₓWO₃), and stirring same until uniform to obtain a functional coating composition;
2. preparing a curved glass pane with a first vertical radius of curvature as an inner glass pane 60; and lying a functional thin film 40 onto the convex surface of a curved glass pane, and then applying the functional coating composition onto the first convex surface 41 of the functional thin film 40 and then thermally curing them together in an oven to obtain a pre-formed functional thin film 40 that had a second vertical radius of curvature and was coated with a functional coating 30 with a thickness of 5.4 µm, wherein the second vertical radius of curvature was 75% of the first vertical radius of curvature; and
3. taking another curved glass pane with a first vertical radius of curvature as an outer glass pane 10, taking two standard PVB sheets as a first binding layer 20 and a second binding layer 50, laminating the two curved glass panes, the two standard PVB sheets, and the functional thin film 40 coated with the functional coating 30 together according to a stacking sequence as shown in Fig. 1, and obtaining a laminated glass D4 according to a production process of automotive glass.

### Example 5

A laminated glass was provided in example 5, which was prepared by a method comprising:
1. mixing 10 g of a chelating agent A, 70 g of a silica sol C, 17 g of an epoxy resin, and 7.3 g of an infrared absorbent (CsₓWO₃), and stirring same until uniform to obtain a functional coating composition;
2. preparing a curved glass pane with a first vertical radius of curvature as an inner glass pane 60; and lying a functional thin film 40 onto the convex surface of a curved glass pane, and then applying the functional coating composition onto the first convex surface 41 of the functional thin film 40 and then thermally curing them together in an oven to obtain a pre-formed functional thin film 40 that had a second vertical radius of curvature and was coated with a functional coating 30 with a thickness of 5.2 µm, wherein the second vertical radius of curvature was 75% of the first vertical radius of curvature; and
3. taking another curved glass pane with a first vertical radius of curvature as an outer glass pane 10, taking two standard PVB sheets as a first binding layer 20 and a second binding layer 50, laminating the two curved glass panes, the two standard PVB sheets, and the functional thin film 40 coated with the functional coating 30 together according to a stacking sequence as shown in Fig. 1, and obtaining a laminated glass D5 following a production process of automotive glass.

### Comparative example 1

A laminated glass was provided in comparative example 1, which was prepared by a method comprising:
1. mixing 80 g of a silica sol C and 20 g of an epoxy resin, and stirring same until uniform to obtain a comparative coating composition, which was used to replace the functional coating compositions in examples 1 to 5;
2. preparing a curved glass pane with a first vertical radius of curvature as an inner glass pane 60; and lying a functional thin film 40 onto the convex surface of a curved glass pane, and then coating the comparative coating onto the first convex surface 41 of the functional thin film 40 and then thermally curing them together in an oven to obtain a pre-formed functional thin film 40 that had a second vertical radius of curvature and was coated with a comparative coating with a thickness of 5.1 µm, wherein the second vertical radius of curvature was 75% of the first vertical radius of curvature; and
3. taking another curved glass pane with a first vertical radius of curvature as an outer glass pane 10, taking two standard PVB sheets as a first binding layer 20 and a second binding layer 50, laminating the two curved glass panes, the two standard PVB sheets, and the functional thin film 40 coated with the comparative coating together according to a stacking sequence as shown in Fig. 1, and obtaining a laminated glass S1 according to a production process of automotive glass.

The laminated glass S1 obtained in comparative example 1 and the laminated glass D1 - D5 obtained in examples 1 to 5 were respectively tested in terms of visible light transmittance, ultraviolet transmittance, total solar transmittance, average transmittance in a wavelength range of 300 nm-420 nm, signal shielding effect, etc., and the test results were as shown in Table 1.

Visible light transmittance: the transmission spectrum of laminated glass in a wavelength range of 250 nm-2,500 nm was measured using a spectrophotometer, and the visible light (380 nm-780 nm) transmittance TL was calculated according to the standard "ISO9050 Glass in building - Determination of light transmittance, solar direct transmittance, total solar transmittance, ultraviolet transmittance and related glazing factors".

Ultraviolet transmittance: the ultraviolet light (300 nm-380 nm) transmittance Tuv was calculated according to the standard "ISO9050 Glass in building - Determination of light transmittance, solar direct transmittance, total solar transmittance, ultraviolet transmittance and related glazing factors".

Total solar transmittance: the total solar transmittance TTS was calculated according to the transmission spectrum of laminated glass in a wavelength range of 250 nm-2,500 nm.

Average transmittance in wavelength range of 300 nm-420 nm: the average transmittance in a wavelength range of 300 nm-420 nm was calculated according to the transmission spectrum of laminated glass in a wavelength range of 250 nm-2,500 nm.

Signal shielding effect: the test was carried out according to "GJB 6190-2008 Measuring methods for shielding effectiveness of electromagnetic shielding materials", with the test frequency in a range of 1 GHz-18 GHz.

In the present invention, the thicknesses of the functional coatings and the comparative coating was measured using a step profiler.

**Table 1: test results of comparative example 1 and examples 1 to 5**

| Evaluation item | Comparative example 1 | Example 1 | Example 2 | Example 3 | Example 4 | Example 5 |
|---|---|---|---|---|---|---|
| Thickness of coating | 5.1 µm | 3.2 µm | 5.2 µm | 5.1 µm | 5.4 µm | 5.2 µm |
| Content of infrared absorbent | 0% | 2% | 2% | 4% | 6% | 7% |
| Visible light transmittance TL | 87.8% | 71.2% | 52.1% | 22.7% | 9.6% | 0.2% |
| Ultraviolet transmittance Tuv | 11.93% | < 1% | < 1% | < 1% | < 1% | < 1% |
| Total solar transmittance TTS | 67.6% | 44.9% | 38.7% | 31.5% | 25.4% | 19.2% |
| Average transmittance in wavelength range of 300 nm-420 nm | 15.86% | 11.62% | < 1% | 8.22% | 6.84% | 5.71% |
| Signal shielding effect | No | No | No | No | No | No |

As could be seen from Table 1, the coatings (examples 1 to 5) containing a chelating agent and an infrared absorbent provided in the present invention had a better absorption effect on visible light than the coating (comparative example 1) without a chelating agent and an infrared absorbent, thereby controlling the total solar transmittance to be 45% or less without causing a signal shielding issue.

### Comparative example 2 and examples 6 to 9

In examples 6 to 9, the same functional coating composition as that in example 3 was used, and the thickness of the functional coating formed after curing was also the same. The difference between examples 6 to 9 and example 3 is that the relative positional relationship of the functional coating 30 and the functional thin film 40 was different.

Example 3: As shown in Fig. 1, viewed from the outside to the inside of a vehicle, the structure of the laminated glass D3 sequentially comprised: an outer glass pane 10, a first binding layer 20, a functional coating 30, a functional thin film 40, a second binding layer 50, and an inner glass pane 60, with the functional coating 30 being applied on the first convex surface 41 of the functional thin film 40.

Example 6: As shown in Fig. 2, viewed from the outside to the inside of a vehicle, the structure of the laminated glass D6 sequentially comprised: an outer glass pane 10, a functional coating 30, a first binding layer 20, a functional thin film 40, a second binding layer 50, and an inner glass pane 60, with the functional coating 30 being applied on the second surface 12 of the outer glass pane 10.

Example 7: As shown in Fig. 3, viewed from the outside to the inside of a vehicle, the structure of the laminated glass D7 sequentially comprised: an outer glass pane 10, a first binding layer 20, a functional thin film 40, a second binding layer 50, a functional coating 30, and an inner glass pane 60, with the functional coating 30 being applied on the third surface 61 of the inner glass pane 60.

Example 8: As shown in Fig. 4, viewed from the outside to the inside of a vehicle, the structure of the laminated glass D8 sequentially comprised: an outer glass pane 10, a first binding layer 20, a functional thin film 40, a functional coating 30, a second binding layer 50, and an inner glass pane 60, with the functional coating 30 being applied on the second concave surface 42 of the functional thin film 40, and the functional thin film 40 coated with the functional coating 30 being pre-formed.

Example 9: As shown in Fig. 5, viewed from the outside to the inside of a vehicle, the structure of the laminated glass D9 sequentially comprised: an outer glass pane 10, a first binding layer 20, a functional thin film 40, a second binding layer 50, an inner glass pane 60, and a functional coating 30, with the functional coating 30 being applied on the fourth surface 62 of the inner glass pane 60.

Comparative example 2: A laminated glass S2, a common laminated glass, was obtained from two curved glass panes and a standard PVB sheet according to a production process of automotive glass.

The laminated glass S2 obtained in comparative example 2, and the laminated glass D3 and D6-D9 obtained in examples 3 and 6 to 9 were respectively tested in terms of total solar transmittance, 24 h ultraviolet light aging resistance, 48 h ultraviolet light aging resistance, evaluation of the number of wrinkles, etc., and the test results were as shown in Table 2.

Ultraviolet aging resistance: according to the requirements of the standard GB/T 5137.3-2020 "Test methods of safety glazing materials used on road vehicles - Part 3: radiation, high temperature, humidity, fire and simulated weathering resistance tests", the laminated glass was irradiated with ultraviolet light for 24 h and 48 h, respectively, and the variation of the visible light transmittances before and after ultraviolet light irradiation were measured, i.e., ΔTL = TL_{after} - TL_{before}.

Evaluation of the number of wrinkles: under the irradiation of a detection light source, the number of areas where apparent wrinkles appeared on the binding layer and functional thin film of laminated glass was identified visually, and the laminated glass was qualified if the number of wrinkled areas per 100 laminated glass was less than or equal to 10.

**Table 2: test results of comparative example 2 and examples 3 and 6 to 9**

| | Comparative example 2 | Example 3 | Example 6 | Example 7 | Example 8 | Example 9 |
|---|---|---|---|---|---|---|
| Total solar transmittance TTS | 67.2% | 39.3% | 39.1% | 38.5% | 38.7% | 38.4% |
| 24 h ultraviolet light aging resistance ΔTL | ≤ 1% | ≤ 1% | ≤ 1% | ≤ 1% | ≤ 1% | ≤ 1% |
| 48 h ultraviolet light aging resistance ΔTL | ≤ 1% | ≤ 3% | ≤ 3% | ≤ 6% | ≤ 6% | ≤ 6% |
| Number of wrinkled areas per 100 laminated glass | 0 | ≤ 2 | ≤ 5 | ≤ 5 | ≤ 2 | ≤ 5 |

As could be seen from Table 2, the test results for the 6 examples above all passed the 24 h ultraviolet light aging resistance test of laminated glass of an automobile. Notably, compared to other examples, examples 3 and 6 showed better results in the 48 h ultraviolet light aging resistance test, mainly due to the infrared absorbent and the ultraviolet absorbent in the functional coating having a protective effect on the functional thin film to some extent. Meanwhile, the test results for the 6 examples above all passed the evaluation of the number of wrinkles. Notably, examples 3 and 8 exhibited fewer apparent wrinkled areas compared to other examples, indicating that the pre-forming of the functional thin film coated with a functional coating could alleviate or eliminate the problem of wrinkling of the functional thin film, thus enhancing the stability of the product.

## Claims

**1.** A laminated glass, comprising an outer glass pane, an inner glass pane, a functional coating, and a functional thin film,
wherein the functional thin film is located between the outer glass pane and the inner glass pane; the functional coating is applied on a surface of the outer glass pane, the inner glass pane, or the functional thin film, and the functional coating is obtained by curing a functional coating composition;
the functional coating can absorb infrared light and/or ultraviolet light, and has a thickness of 3 µm to 20 µm; and
the functional thin film comprises at least two alternately stacked resin thin films, and has a visible light transmittance of greater than or equal to 70%.

**2.** The laminated glass according to claim 1, wherein the functional thin film has a thickness of 50 µm to 200 µm.

**3.** The laminated glass according to claim 1, wherein the laminated glass has a visible light transmittance of greater than or equal to 70%, and a total solar transmittance of less than or equal to 45%.

**4.** The laminated glass according to claim 1, wherein the laminated glass has a visible light transmittance of less than or equal to 55%, and a total solar transmittance of less than or equal to 40%.

**5.** The laminated glass according to claim 1, wherein the laminated glass has a visible light transmittance of less than or equal to 10%, and a total solar transmittance of less than or equal to 30%.

**6.** The laminated glass according to claim 1, wherein the laminated glass has a visible light transmittance of less than or equal to 5%, and a total solar transmittance of less than or equal to 20%.

**7.** The laminated glass according to any one of claims 4-6, wherein the laminated glass further comprises a switchable element which is located between the functional thin film and the inner glass pane, and the switchable element comprises one of a PDLC switchable film, an SPD switchable film, or an EC switchable film.

**8.** The laminated glass according to any one of claims 1-7, wherein the laminated glass further comprises at least one binding layer, which is located between the outer glass pane and the inner glass pane; and the material for the binding layer comprises one of or a combination of two or more of PVB, PU, SGP and EVA.

**9.** The laminated glass according to claim 8, wherein the laminated glass comprises at least two binding layers, which are located between the outer glass pane and the functional thin film, and between the inner glass pane and the functional thin film; and the binding layer between the outer glass pane and the functional thin film has a visible light transmittance of greater than or equal to 80%.

**10.** The laminated glass according to claim 1, wherein the functional thin film has an infrared reflectance of greater than or equal to 35%; and the functional thin film comprises 50 to 5,000 alternately stacked resin thin films, with the difference in the refractive index between adjacent resin thin films being 0.05 or more.

**11.** The laminated glass according to claim 1, wherein the raw materials for the functional coating composition comprise a chelating agent, a silica sol, a transparent resin, and an infrared absorbent.

**12.** The laminated glass according to claim 11, wherein the mass ratio of the chelating agent, the silica sol, the transparent resin, and the infrared absorbent is (5-20) : 100 : (20-40) : (1-15).

**13.** The laminated glass according to claim 11, wherein the raw materials for the chelating agent comprise an ultraviolet absorbent.

**14.** The laminated glass according to claim 13, wherein the raw materials for the chelating agent further comprise a first catalyst, a first coupling agent, and a first solvent; and among the raw materials for the chelating agent, the mass ratio of the ultraviolet absorbent, the first catalyst, the first coupling agent, and the first solvent is (1-30) : (0.01-1) : (10-30) : (40-60).

**15.** The laminated glass according to claim 11, wherein the raw materials for the silica sol comprise a silicate, a second catalyst, a second coupling agent, a second solvent, and water; and among the raw materials for the silica sol, the mass ratio of the silicate, the second catalyst, the second coupling agent, the second solvent, and water is (15-35) : (0.01-1) : (5-15) : (30-60) : (10-30).

**16.** The laminated glass according to claim 11, wherein the transparent resin comprises an epoxy resin.

**17.** The laminated glass according to claim 11, wherein the infrared absorbent is nanoparticles of a transparent electrically conductive oxide, which comprises one of or a combination of two or more of ITO, FTO, WO₃, CsxWO₃, ATO, and doped VO₂.

**18.** The laminated glass according to claim 1, wherein the laminated glass has a first vertical radius of curvature, the functional thin film after pre-forming has a second vertical radius of curvature, and the second vertical radius of curvature is 40% to 100% of the first vertical radius of curvature;
wherein the pre-forming process refers to, prior to forming the laminated glass, a process in which a functional thin film is laid onto a curved glass pane, and then a functional coating composition is applied on the surface of the functional thin film and is thermally cured, such that the surface of the pre-formed functional thin film has the functional coating.

**14.** The laminated glass according to claim 1, wherein the outer glass pane is a transparent glass with a visible light transmittance of greater than or equal to 70%, or a colored glass with a visible light transmittance of greater than or equal to 70%; and the inner glass pane is a transparent glass with a visible light transmittance of greater than or equal to 70%, or a colored glass with a visible light transmittance of greater than or equal to 70%.

**20.** The laminated glass according to any one of claims 1-19, wherein the laminated glass further comprises a low-emissivity plated film deposited on the surface of the inner glass pane that is closer to the interior of a vehicle, the low-emissivity plated film comprises at least one transparent electrically conductive oxide layer, and the laminated glass has an emissivity of 0.01 to 0.25 as measured inside the vehicle.
